# EUROPEAN PATENT SPECIFICATION

(11) **EP 0 634 873 B1**
(45) Date of publication and mention of the grant of the patent: **09.09.1998**
(21) Application number: 94109935.0
(22) Date of filing: 28.06.1994
(51) Int. Cl.: H04N 7/32

(54) **Method to determine the motion vectors in small picture segments of a television picture**
Verfahren zur Bestimmung von Bewegungsvektoren in kleinen Bildsegmenten in Fernsehbildern
Méthode pour la détermination de vecteurs de mouvement dans des petits segments d'images de télévision

(30) Priority: 15.07.1993 FI 933216
(43) Date of publication of application: 18.01.1995
(73) Proprietor: NOKIA TECHNOLOGY GmbH, 75175 Pforzheim (DE)
(72) Inventor: Koivunen, Tero, SF-33720 Tampere (FI)

(56) References cited:
- EP-A- 0 406 074
- EP-A- 0 537 958
- US-A- 3 983 320
- US-A- 4 796 087
- PATENT ABSTRACTS OF JAPAN vol. 6, no. 132 (E-119) 17 July 1982 & JP-A-57 057 088 (NEC CORPORATION) 6 April 1982

## Description

The invention relates to a method which is able to determine the motion vectors in smaller segments than blocks of a television picture, when the motion vectors of the blocks are known.

Information of the motion contents of the picture is added to the transmitted signal so that in a television receiver the received video signal can be processed by some motion compensated method, by increasing the line rate of the television picture (LRU, Line Rate Upconversion) or by increasing the field rate (Field Rate Upconversion). In high definition television (HDTV) systems the picture is divided into small blocks, e.g. 16*16 pixels, and by a suitable motion detection method we determine for the blocks a motion vector which defines the direction and extent of the motion. The motion vectors are transmitted as data signal separated from the video signal. At the transmission end the blocks having different motion contents are processed differently, whereby each transmitted block is accompanied by a certain motion vector. When the receiver generates the original picture it can in then select the correct signal processing method in accordance with the motion contents of the block.

There are several known motion detection methods to calculate the motion vectors. Most often these methods are based on difference signals, which are calculated between two pictures, and on whether the picture contains motion or not, which is concluded with the aid of these difference signals. The motion estimation methods may be divided into two main classes: methods which detect motion parameters, and methods which measure pixel speed. Further it is possible to classify the pixel measuring methods in methods based on spatial-temporal differentials, methods based on matching and examining block equivalence at different moments, and methods based on Fourier techniques.

The motion parameter difference methods are not particularly well suited to estimate the motion in television, due the limitation placed on the picture and due to the method itself. Techniques based on spatial-temporal differentials which belong to the methods measuring the pixel speed are based solely on propagation models. They assume that the intensity variation is entirely a linear function of the movement in the television picture field. Several differentials are calculated both in the temporal direction (between successive fields) and in the spatial direction (in the horizontal and vertical directions). These differential ratios provide the spatial movement, the pixel being the unit for each picture. The Fourier techniques use correlation of two pictures, so that a two-dimensional Fourier transformation is first made for each picture, then the corresponding frequency components are multiplied, and then the inverse transformation is performed. The result is a correlation surface having a peak at those coordinates which correspond to a movement between two pictures. The Fourier method is well suited for measuring the global motion, and the accuracy can be further increased by using some further processing, such as interpolation of the correlation surface and postprocessing.

An often used transformation belonging the methods measuring the pixel speed is block matching, which estimates area by area instead of estimating pixel by pixel. Below the word "field" means both the field of an interleaved picture and the field of a progressive picture, which then is equal to the picture. In block matching the fields are divided into blocks of the size n*m, and it is assumed that all pixels within the block have equal movement vectors. An example illustrates the block matching: let's assume that a block (= a sub-area of a certain size in the picture) of n*m pixels in a field t contains an object, e.g. a picture of a car. This block may be called the reference block. The car moves, and in the next field t+1 it has moved into a new position.

Now we must find the new position. This is made so that in the new field t+1 we define a search area within which we move a block having the same size as the reference block, i.e. n*m pixels. We can assume this block to be a window, through which we see a pixel set of the field within an area having the size of the window. In each position of the contents of the block (window) is compared with the contents of the reference block of the field t. In the comparison we compare the pixels of the window with the corresponding pixels of the reference block of field t. As the block (window) is moved over the field t+1, then the comparison condition is met in some position of the field t+1, which then is interpreted so that the blocks have the same contents. Now the blocks "match", because their contents are identical. Then we know that the car has moved to this position in the field t+1. Thus we obtain the magnitude and direction of the movement.

One example of block matching is e.g. described in EP-A-0 406 074. This document describes a procedure which segments a field of movement into vectors based on the displacement of pixels between an image and an image preceding it. The image is partitioned into blocks of pixels and a movement vector assigned to each block. Secondly, a histogram of movement vectors by blocks is constructed. Next, dominant movement vectors are assigned to each block representing a larger scale of movement. The isolated block vectors are filtered and finally the output necessary for coding the resulting filtered field of movement is calculated using the 'quad-tree' coding method.

Block matching is a motion vector determination method which is used very often due to its clarity. In this method, as well as in the other above mentioned methods, the motion vector determined for a certain block is assumed to represent the motion direction of all pixels in the block, and the picture processing is made according to this assumption. Thus the motion vectors only estimate the motion of the majority of the pixels in the block, or in some cases they only minimize a certain error criterion. Thus the real movement within a block seldom follows the boundaries of the block but crosses them in an arbitrary way. In certain cases this way to set the direction of the motion vector of a block to be the same over the whole block will thus cause clearly discernible picture errors.

One way to reduce picture errors is dynamic block size assignment. The selected block size in a fixed block coding system is a compromise between the desire to have large size blocks for limiting the number of displacement vectors and therefore the bit rate of the transmission line and the wish to have small size blocks to make it possible to better distinguish within the picture close small objects with different movements. The size of a block is fixed as a function of these two opposing criteria and is never satisfactory.

An example of dynamic block matching is described in US-A-4,796,087. This document describes a data block from the current picture being subtracted from one corresponding to a previous picture stored in memory. A movement detector has three outputs corresponding to different results of subtraction and if no movement is detected, a nonrefresh code is transmitted with a block identifier.

If movement is detected, the block is decomposed into subblocks for comparison with the equivalent subblocks in the same block of the previous picture. A compensating circuit delivers a displacement vector signal to compensate the block or subblocks of the current picture.

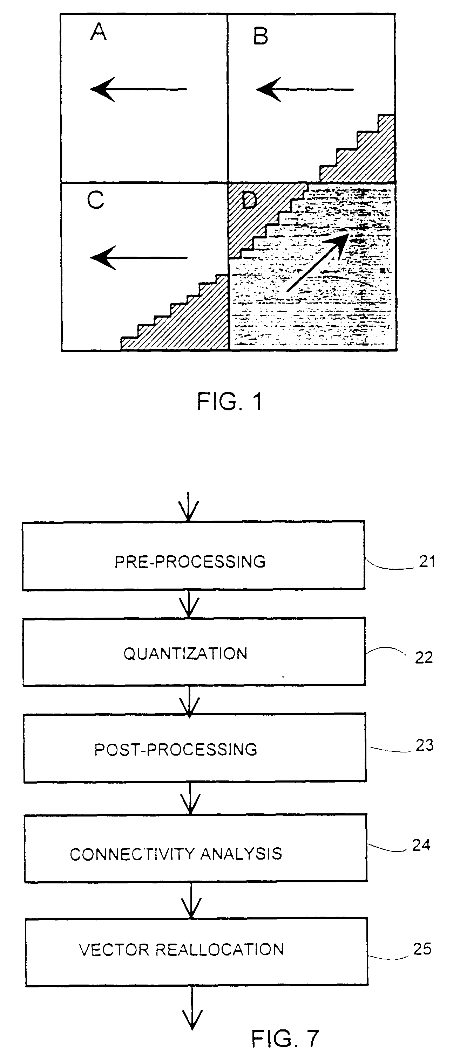

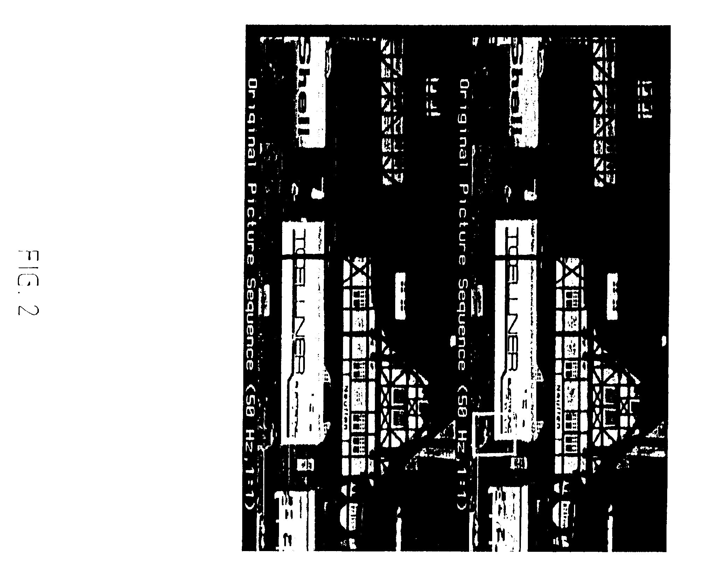

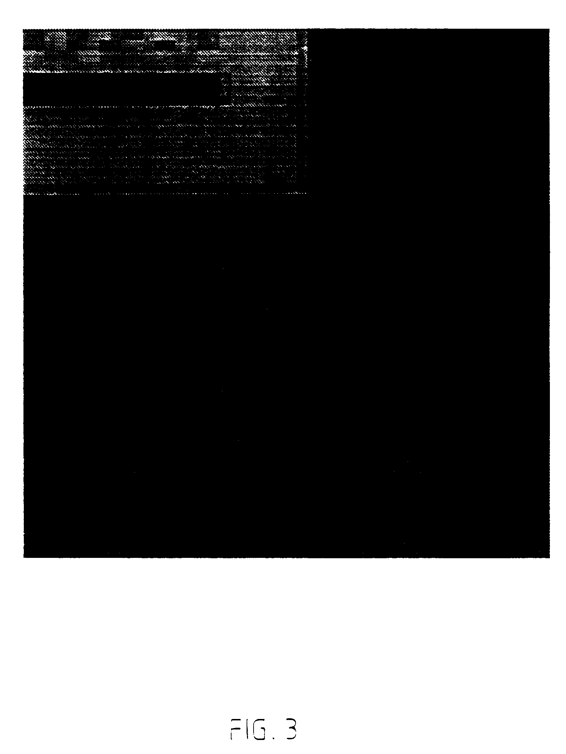

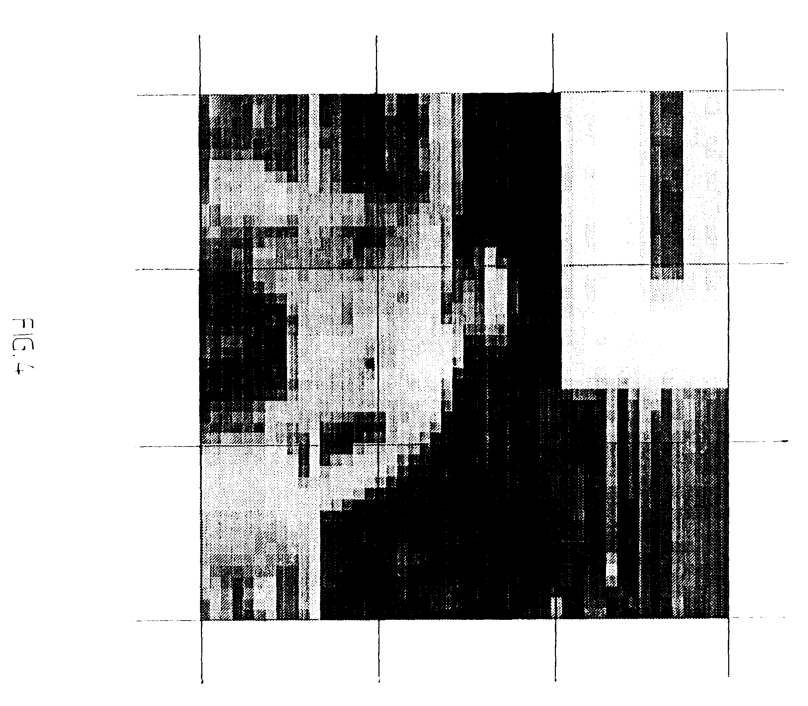

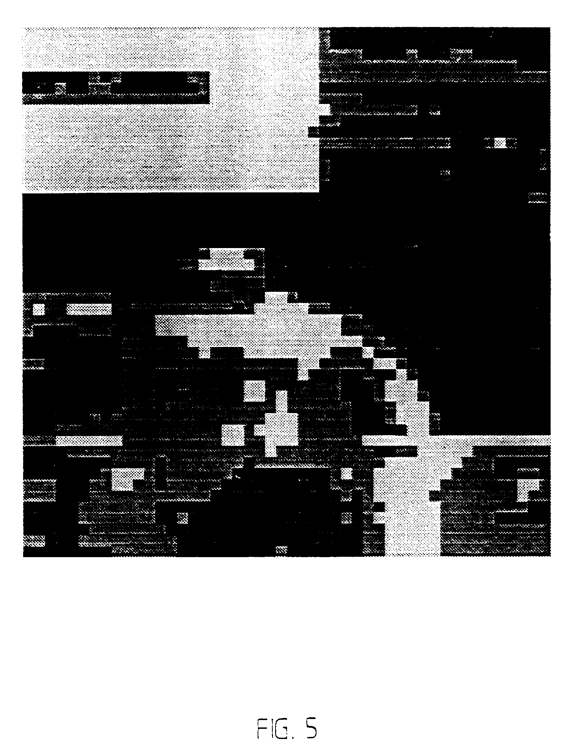

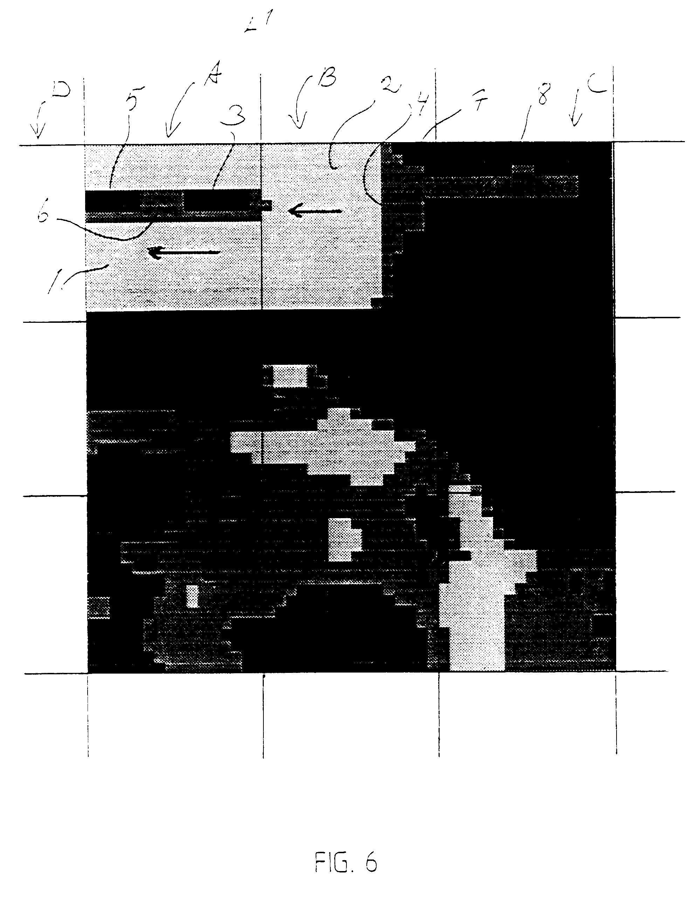

Figure 1 shows in an illustrative way the reason why picture errors are created when the prior art motion vector determination is used. The figure shows four regular quadratic blocks A, B, C and D, each block having a respective motion vector determined by the block matching method.

The motion vectors are shown by arrows in each block, and according to these the movement direction of all pixels in blocks A, B and C is to the left, whereas the movement direction of all pixels in block D is up and to the right. According to prior art all pixels of a block get the same direction of the motion vector. As we can see in the figure, the direction of the step line is probably up and to the right, because that is the direction of the majority of the pixels in block D. Thus the directions of the segments divided by the step line do not follow the borders of the blocks (they are not the same as the direction of the motion vector of the block), but crosses the borders. The light segments in blocks A, B and C have a correct direction of motion. Also the darkened segment in block D has the correct direction of motion. But on the contrary, the correct direction of motion of the striped segments in blocks C and D is up and to the right, and not to the left. Thus we can see that the prior art decision concerning the motion direction is erroneous for a large part of the pixels, or for those pixels belonging to the striped areas. Therefore discernible errors are caused when the picture is processed block by block in the receiver according to these main vectors.

The object of this invention is to obviate the disadvantages of the known methods to determine the motion vectors, and thus to obtain a method with which it is possible to determine the motion vectors correctly also for small segments of irregular shape which border on the edges of moving objects.

This object is achieved with the means described in the characterizing clause of claim 1.

The method is shown as a block diagram in figure 7.

First we preprocess the picture, for which motion vectors already have been determined by a known method, e.g. by block matching. The object of this is to increase the contrast in the picture and to make contours clearly discernible. The object is thus to detach the objects from their background on the basis of the spatial information only, and to make different areas of the picture clearly discernible. The areas are distinguished by their gray level.

Then the number of gray levels is reduced by thresholding the picture samples, e.g. from samples of 8 bits to samples of 3 bits, whereby the number of gray levels is reduced from 256 to 8. The thresholding can be equidistant and the number of gray levels even smaller, e.g. four levels (2 bits) is quite suitable. After thresholding the picture seems to comprise areas of different size and form but of uniform shade, whereby these areas are distinguished by their gray level. These areas are called segments. The higher the number of levels after thresholding the more there are small discernible areas in the picture representing the details of the picture. The object of the thresholding is on one hand to get rid of very small segments, and thus a low level thresholding with e.g. 4 levels is preferable. After the thresholding there is still a postprocessing, with which the picture is smoothed even more by eliminating islands of the size of a few pixels which strongly differ from their neighborhood. As a result of the above mentioned measures the picture is simplified to areas or segments of different sizes but with a uniform shade (uniform color), and the number of the gray levels (colors) in the picture is minimal. A segment is thus a uniform set of adjacent pixels having the same gray scale value after the preprocessing, quantizing and postprocessing.

Then a motion vector is determined for each segment. As a basis there is the fact that the same picture is divided into blocks (adjacent picture areas of equal size) in the transmitter or the encoder, a block motion vector being determined for each block by a known method, such as by block matching. In a way each block covers a part of the segmented picture. If a block border crosses a segment, then the segment is thought of as being divided in two, whereby one part belongs to one block and the other part to another block. Thus the segments can not extend into the area of a neighboring block. The largest segment in the area of a block is found first, and it is called the main segment. Thus the area of a block can contain segments of four different kinds:
1) one main segment;
2) one or more segments being not the main segment and not next to a segment of a neighboring block;
3) one or more segments being not the main segment and being next to the main segment of a neighboring block;
4) one or more segments being not the main segment and being next to a segment of a neighboring block, which is not a main segment.

The same vector which was obtained as the motion vector of the "own" block by a prior art method is selected as the candidate for the main segment.

Other segments in the block area which are not next to any segment of a neighboring block, which thus are not next to the border of the "own" block but entirely within the own block, get as the motion vector that motion vector, which in a known way was obtained for the own block.

Other segments in the block area which are next to a segment of a neighboring block, being however not the main segment of the neighboring block, get as the motion vector that motion vector, which in a known way was obtained for the own block.

Other segments within the block area which are next to a main segment of a neighboring block get as the motion vector that motion vector value of the main segment in the neighboring block. This value thus equals the value of that value which was calculated by the prior art method for the motion vector of the neighboring block.

Except for the main segment a segment can thus get as the motion vector either the motion vector of the own block or the motion vector of the neighboring block.

Now each main segment has a candidate for the motion vector. The final motion vector is decided so that we examine whether the main segment continues into at least two neighboring blocks, and whether the part in the neighboring area is a main segment. In that case the segments form the same object, so that their motion vectors should be consistent. Therefore, a motion vector candidate is not accepted if it differs from the motion vectors of the corresponding segments in the neighboring blocks it, but the motion vector is selected to be the value of the motion vectors of the main segments of the neighboring blocks.

According to a preferred embodiment the preprocessing is a histogram equalization, or a smoothening of the distribution. This means that within the window in use we order the samples according to the magnitude of the gray scale value, e.g. 0 to 256. The result could be thought of as a histogram having a very uneven row of columns. Then the row of columns is leveled so that it is as uniform as possible, which results in an increased contrast and clearly pronounced contours.

According to a preferred embodiment median filtering is used as postprocessing.

The invention is illustrated by the enclosed example figures, in which
- figure 1: shows four blocks, for which the motion vectors are obtained by any known means;
- figure 2: shows the original picture sequence;
- figure 3: is an enlarged area of the sequence of figure 1;
- figure 4: shows the figure 3 after histogram equalization;
- figure 5: shows the figure 4 after quantization;
- figure 6: shows the figure 5 after postprocessing; and
- figure 7: shows the steps of the method as a block diagram.

The picture sequence of figure 2 shows a train passing a station. An area of the size 48*48 pixels is outlined with white borders. This covers four blocks of 16*16 pixels, each having a motion vector of its own which is determined by any block matching method. According to the invention the motion vectors are found for substantially smaller areas than for the said areas of the size 16*16. The area outlined with white borders in figure 2 is shown enlarged and in black and white in figure 3. With the aid of the following figures we examine how the different steps of the method affect this picture.

According to the first step (step 21 in figure 7) of the method the whole figure 2 is preprocessed. There a histogram equalization is first made on the whole figure 2. The samples of the picture are ordered according to the magnitude of the gray scale value, e.g. with samples of 8 bits the order is 0 to 256. The result can be seen as a histogram, where the height of each column is proportional to the number of samples with that value. Thus the row of columns is very uneven. The row of columns is then leveled so that it will be as even as possible, whereby the gray scale value of certain samples is increased and that of others decreased. As a result there is an increased contrast in the picture and the contours of surfaces are clearly visible. The result is shown in figure 4. This figure shows how the area of figure 3 has changed after the histogram equalization. The contrast has increased and the surface contours of different areas are more clearly visible.

After equalization there is performed a uniform quantization (step 22 in figure 7) of the whole picture, in which the picture of 256 gray levels (8 bits) is quantified into a picture of 4 levels (2 bits). In figure 5 we can see the result for the four blocks of interest. Already the reduction of gray levels makes the segments clearly visible. However, we can clearly see small areas formed by a few pixels, where the gray scale slightly differs from their surrounding. In order to further simplify the picture and to equalize the segments we further perform a postprocessing (step 23 in figure 7) in order to replace the value of these pixels with the value of the surrounding pixels. Any median operation is suitable for the postprocessing. In this example we used a 9 point median filter. The pixels in a 3*3 window are supplied to a filter, providing an output value (= the median of the pixels) which replaces the value of the center pixel. The obtained result is shown in figure 6. When we compare this with the original unprocessed picture 3 we can clearly see that the picture has changed into a set of adjacent segments with clear borders. Each segment forms thus a set of adjacent pixels with the same gray scale value.

For each of these segments we now determine its own motion vector (step 25 in figure 7). The grid drawn in figure 6 represents the block boundaries, with which the picture originally was divided, and thus each block then has a motion vector determined by some block matching method. Let us now examine the segmented picture through the blocks. A segment is cut at the block border when it extends over a block border into another block. For example, at the top left there is a large light segment within the blocks A and B. The border line L1 between the blocks divides this segment into two independent segments 1 in block A and 2 in block B.

Within the block area there can be segments of four kinds:
1) One main segment, which is the segment within the block area having the largest number of pixels. The segment 1 in block A and the segment 2 in block B are of this kind.
2) One or more segments, which are not the main segment and do not border on a segment of the adjacent block. The segment 3 in block is on this kind.
3) One or more segments, which are not the main segment and border on the main segment of an adjacent block. The segments 5 and 6 in block A and the segments 4, 7 and 8 in block B are of this kind.
4) One or more segments, which are not the main segment and border on a segment of the adjacent block, which is not the main segment. The segment 4 of block B is of this kind.

Each vector is provided with a motion vector according the following rule:

The same vector which was obtained as the motion vector of the "own" block by a prior art method is selected as the candidate for the main segment. The candidate vectors are shown by arrows in the main segments 1 and 2. Now the main segment of each block has a motion vector candidate. The correctness of the motion vector candidates is checked when they are selected for the blocks (step 24 in figure 7). The final motion vector is selected so that we examine whether the main segment extends into at least two neighboring segments, and whether the part in the neighboring area is a main segment. If this is true, then the segments form the same object, and so their motion vectors should be consistent. Therefore, if a motion vector candidate is different from the motion vectors of said segments, it is not accepted, but the motion vector gets the motion vector value of the main segments of the neighboring blocks. For example, the main segment 1 of block A extends both into block B and (we assume) into block D, and the part of the segment in these blocks is also the main segment of the block. If the direction of the vector candidate for the main segment in block B would be e.g. "up", the final vector is corrected to have the direction "left", so that the vectors of the main segments are consistent and all pixels of the object formed by them have the same direction of motion.

Other segments in the block area which are not next to any segment of a neighboring block, which thus are not next to the border of the "own" block but entirely within the own block, get as the motion vector that motion vector, which in a known way was obtained for the own block. Thus the segment 3 gets as its motion vector the same motion vector as segment 1.

Other segments in the block area which are next to a segment of a neighboring block, being however not the main segment of the neighboring block, get as the motion vector that motion vector, which in a known way was obtained for the own block. Thus the segment 4 in block B gets as its motion vector the motion vector of block B (and at the same time of the main segment 2 of this block).

Other segments within the block area which are next to a main segment of a neighboring block get as the motion vector the motion vector value of the main segment in the neighboring block. Thus the segments 7 and 8 of block B get as their motion vector the value which was calculated for the neighboring block C (e.g. up to the right).

According to prior art the motion vector of the segments 7 and 8 in block B would point to the left, but using the invention the motion vector points now "up to the right". Because the segments 7 and 8 clearly belong to the main segment of block C and thus also to its motion, the use of a known technique in picture processing would produce obvious errors at the edges of an object. No errors are now generated because these are correctly processed according to the invention.

Each segment of the picture gets a motion vector according to the presented principles.

The method is particularly well suited to be used in television systems where the picture is differently encoded at the originating end of the transmission link depending on its motion contents. In addition to the encoded picture also motion vectors of the segments are transmitted, so that the receiver is able to process the video signal differently depending on its motion contents.

The method of the invention is based on the perception that the picture is processed in order to obtain distinctly discernible segments, whereby an object and the background are separated and form a surface of uniform shade without any details. Then they can be separately processed and be given motion vectors. Thus the invention does not in any way limit the methods by which each individual step of the method is realized. The above mentioned histogram equalization and median filtering are only some of the preferred embodiments, but they do not limit the invention in any way.

## Claims

1. A method to determine the motion vectors of a television picture when the picture first has been divided into blocks of equal size and form, and when for each block a motion vector has been calculated which represents the magnitude and direction of motion contents for all pixels of the block, **characterized** in that
- the television picture is preprocessed in a process changing the gray scale values of the pixels in order to equalize their value distribution;
- the preprocessed picture is quantified in order to reduce the number of its gray levels, whereby a picture is obtained comprising uniformly shaded segments of different sizes and different forms, the largest segment in each block is defined as main segment, main segments extending over several blocks are assumed to belong to the same object with a consistent motion vector being determined as follows:
- the block motion vector value of the respective block is made the motion vector candidate for the main segment;
- if the main segment extends over at least two neighboring block areas and the part in those block areas is also the main segment of the respective neighboring blocks, and if the motion vector candidate is identical with the neighboring motion vector candidates, then the motion vector candidate is accepted as the motion vector of the main segment; if the motion vector candidate is different from identical neighbor candidates, the motion vector candidate is rejected and the main segment gets as its motion vector the motion vector of one of the neighboring blocks, otherwise the motion vector candidate is accepted as the motion vector of the main segment;
- other segments within the block, which border on the main segment of a neighboring block, get as the motion vector the motion vector value of this neighboring main segment, and
- other segments in the block area which are not next to any segment of a neighboring block get as the motion vector the motion vector value of the own block, and
- other segments in the block area, which are next to a segment of a neighboring block which is not the main segment of the neighboring block, get as the motion vector the motion vector value of the own block.

2. The method according to claim 1, **characterized** in that the preprocessing is a histogram equalization.

3. The method according to claim 1, **characterized** in that the quantization is equidistant and that 8 bit pixels are quantified into 2 bit pixels.

4. The method according to claim 1, **characterized** in that further the quantified picture is filtered.

5. The method according to claim 4, **characterized** in that the filtering is a median filtering.

6. The method according to claim 5, **characterized** in that it uses a 9 point median filter.

## Patentansprüche

1. Verfahren zum Bestimmen der Bewegungsvektoren in einem Fernsehbild, wenn das Bild zunächst in Blöcke von gleicher Größe und Form unterteilt wird und wenn für jeden Block ein Bewegungsvektor berechnet wurde, der die Größe und Richtung von Bewegungsinhalten für alle Bildpunkte des Blockes repräsentiert, dadurch gekennzeichnet, daß
- das Fernsehbild in einem Vorgang vorverarbeitet wird, bei dem die Grauskalenwerte der Bildpunkte geändert werden, um deren Werteverteilung auszugleichen;
- das vorverarbeitete Bild quantifiziert wird, um die Zahl seiner Graustufen zu verringern, so daß ein Bild entsteht, das gleichförmig schattierte Segmente unterschiedlicher Größen und unterschiedlicher Formen umfaßt, wobei das größte Segment in jedem Block als Hauptsegment definiert ist, wobei davon ausgegangen wird, daß über mehrere Blöcke verlaufende Hauptsegmente zu demselben Objekt gehören, wobei ein einheitlicher Bewegungsvektor wie folgt bestimmt wird:
- der Blockbewegungsvektorwert des jeweiligen Blockes wird zum Bewegungsvektorkandidaten für das Hauptsegment gemacht;
- wenn das Hauptsegment über wenigstens zwei Nachbarblockbereiche verläuft und der Teil in diesen Blockbereichen auch das Hauptsegment der jeweiligen Nachbarblöcke ist, und wenn der Bewegungsvektorkandidat mit den benachbarten Bewegungsvektorkandidaten identisch ist, dann wird der Bewegungsvektorkandidat als der Bewegungsvektor des Hauptsegmentes akzeptiert; wenn sich der Bewegungsvektorkandidat von identischen Nachbarkandidaten unterscheidet, dann wird der Bewegungsvektorkandidat zurückgewiesen und das Hauptsegment erhält als seinen Bewegungsvektor den Bewegungsvektor von einem der Nachbarblöcke, ansonsten wird der Bewegungsvektorkandidat als der Bewegungsvektor des Hauptsegmentes akzeptiert;
- andere Segmente in dem Block, die an das Hauptsegment eines Nachbarblockes angrenzen, erhalten als den Bewegungsvektor den Bewegungsvektorwert ihres benachbarten Hauptsegmentes, und
- andere Segmente in dem Blockbereich, die sich nicht neben einem Segment eines Nachbarblockes befinden, erhalten als Bewegungsvektor den Bewegungsvektorwert des eigenen Blockes, und
- andere Segmente in dem Blockbereich, die sich neben einem Segment eines Nachbarblockes befinden, der nicht das Hauptsegment des Nachbarblockes ist, erhalten als Bewegungsvektor den Bewegungsvektorwert des eigenen Blockes.

2. Verfahren nach Anspruch 1, dadurch gekennzeichnet, daß die Vorverarbeitung ein Histogrammausgleich ist.

3. Verfahren nach Anspruch 1, dadurch gekennzeichnet, daß die Quantisierung äquidistant ist und daß 8-Bit-Bildpunkte zu 2-Bit-Bildpunkten quantifiziert werden.

4. Verfahren nach Anspruch 1, dadurch gekennzeichnet, daß ferner das quantifizierte Bild gefiltert wird.

5. Verfahren nach Anspruch 4, dadurch gekennzeichnet, daß die Filterung eine Medianfilterung ist.

6. Verfahren nach Anspruch 5, dadurch gekennzeichnet, daß es einen 9-Punkte-Medianfilter benutzt.

## Revendications

1. Méthode pour déterminer les vecteurs de mouvement d'une image de télévision lorsque l'image a d'abord été divisée en blocs de taille et de forme égales, et lorsque pour chaque bloc un vecteur de mouvement a été calculé qui représente l'amplitude et le sens des volumes de mouvement pour tous les pixels du bloc, caractérisée en ce que:
- l'image de télévision est prétraitée dans un traitement changeant les valeurs d'échelle de gris des pixels afin d'égaliser la distribution de leurs valeurs;
- l'image prétraitée est quantifiée afin de réduire le nombre de ses niveaux de gris, de sorte qu'une image est obtenue comprenant des segments uniformément ombrés de tailles différentes et de formes différentes, le plus grand segment dans chaque bloc est défini comme segment principal, des segments principaux s'étendant sur plusieurs blocs sont supposés appartenir au même objet avec un vecteur de mouvement consistant qui est déterminé comme suit :
-- la valeur du vecteur de mouvement de bloc du bloc respectif devient le candidat du vecteur de mouvement pour le segment principal;
-- si le segment principal s'étend sur au moins deux zones de blocs voisins et si la partie dans ces zones de blocs est aussi le segment principal des blocs voisins respectifs, et si le candidat du vecteur de mouvement est identique aux candidats des vecteurs de mouvement voisins, alors le candidat du vecteur de mouvement est accepté comme vecteur de mouvement du segment principal; si le candidat du vecteur de mouvement est différent de candidats voisins identiques, le candidat du vecteur de mouvement est rejeté et le segment principal a comme vecteur de mouvement le vecteur de mouvement d'un des blocs voisins, sinon le candidat du vecteur de mouvement est accepté comme vecteur de mouvement du segment principal;
-- d'autres segments dans le bloc, qui bordent le segment principal d'un bloc voisin, ont comme vecteur de mouvement la valeur du vecteur de mouvement de ce segment principal voisin; et
-- d'autres segments dans la zone de blocs, qui ne sont pas contigus à un segment quelconque d'un bloc voisin, ont comme vecteur de mouvement la valeur du vecteur de mouvement du bloc particulier; et
-- d'autres segments dans la zone de blocs, qui sont contigus à un segment d'un bloc voisin qui n'est pas le segment principal du bloc voisin, ont comme vecteur de mouvement la valeur du vecteur de mouvement du bloc particulier.

2. Méthode selon la revendication 1, caractérisée en ce que le prétraitement est une égalisation d'histogramme.

3. Méthode selon la revendication 1, caractérisée en ce que la quantification est équidistante et en ce que des pixels de 8 bits sont quantifiés en des pixels de 2 bits.

4. Méthode selon la revendication 1, caractérisée en ce que l'image quantifiée est en outre filtrée.

5. Méthode selon la revendication 4, caractérisée en ce que le filtrage est un filtrage par moyenne.

6. Méthode selon la revendication 5, caractérisée en ce qu'elle utilise un filtre à moyenne de 9 points.
